# EUROPEAN PATENT APPLICATION

(11) **EP 4 336 692 A1**
(43) Date of publication of application: **13.03.2024**
(21) Application number: 22195173.4
(22) Date of filing: 12.09.2022
(51) Int. Cl.: H02J 3/14, B60L 53/63, H02J 3/26, H02J 7/02

(54) **CHARGING ARRANGEMENT FOR BALANCING PHASE CURRENTS**

(71) Applicant: ABB E-Mobility B.V., 2629 JG Delft (NL)
(72) Inventor: VAN-DER-HORST, Arjen, 2623 GT Delft (NL); BAETEN, Brecht, 3660 Oudsbergen (BE)
(74) Representative: Maiwald GmbH

(57) **Abstract**

The invention relates to a charging arrangement (100) for balancing load currents on multiple phases, the load currents being unbalanced between the phases caused by consumers connected to the phases. The charging arrangement comprises a three-phase current output line L1, L2, L3, with one phase conductor for each phase, and a controller (102). The controller (102) comprises means to control the load current in each of the phase conductors by controlling a consumer and thereby balancing the amount of current between the phase conductors.

## Description

### Technical Field

The invention relates to a charging arrangement for balancing load current on multiple phases, a method for balancing phases of a charging arrangement, a consumer comprising means for controlling its load on the phases, and a use of a consumer charging controller for balancing phases of a charging arrangement.

### Background

In this disclosure, the term "limit" relates always to a limit of an electric current and represents a value indicating the maximum allowed load current. A load current is the current of a consumer that consumes the power provided by an electric grid. The term "load" is used equivalent to and interchangeable with "load current" in this disclosure. Further, "phase" relates to a wire or conductor of a multi-wire system, where through each conductor flows an AC current that has a phase shift with respect to the current flowing through the further conductors. The phases represent a power grid to which consumers may be connected. In such a multiphase, usually 3-phase installation, it might be required that all individual phases have a load with the same amount within a certain margin. When devices in the installation do not use all 3 phases by the same amount, there is a risk that the individual phases are loaded unequally, i.e., do not deliver the same amount of current. This may happen, for example, if devices do not use all of the phases.

### Summary of the invention

There may be a desire to provide an arrangement that improves the load balancing.

The problem is solved by the subject-matter of the independent claims. Embodiments are provided by the dependent claims, the following description and the accompanying figures.

The described embodiments similarly pertain to the charging arrangement for balancing load current on multiple phases, the method for balancing phases of a charging arrangement, the consumer comprising means for controlling its load on the phases, and the use of a consumer charging controller for balancing phases of a charging arrangement. Synergetic effects may arise from different combinations of the embodiments although they might not be described in detail.

Further on, it shall be noted that all embodiments of the present invention concerning a method might be carried out with the order of the steps as described, nevertheless this has not to be the only and essential order of the steps of the method. The herein presented methods can be carried out with another order of the disclosed steps without departing from the respective method embodiment, unless explicitly mentioned to the contrary hereinafter.

Technical terms are used by their common sense. If a specific meaning is conveyed to certain terms, definitions of terms will be given in the following in the context of which the terms are used.

According to a first aspect, a charging arrangement for balancing load currents on multiple phases, the load currents being unbalanced between the phases caused by consumers connected to the phases, is provided. The charging arrangement comprises a three-phase current output line with one phase conductor for each phase, and a controller. The controller comprises means to control the load current in each of the phase conductors by controlling a consumer and thereby balancing the amount of current between the phase conductors.

The charging arrangement presented herein is generally applicable to any multi-phase installation, where phases are subject to different loads on each phase. A multi-phase installation relates preferably to a 3-phase installation. Such a multi-phase installation has one wire or "conductor" for each phase, wherein a "phase" is seen as a current line, which differs from the other current lines by the phase angle, which is n times 360°/N, where n is between 1 and N-1, and N is the total number of lines. Especially in vehicle charging applications, there are consumers that are connected to all, for example, three phases, but other consumers that are connected only to one or two phases of a three-phase installation. This circumstance results in an unbalanced load between the phases. Therefore, the charging arrangement presented herein provides a controller comprising means to control the load current in each of the phase conductors. These means are, for example, processing means or a logic to determine the different loads and to control the loads on each phase. The control may is performed not directly on limiting the current of a charger but by controlling the consumer, for example, by emitting a control signal to the consumer as described in more detail in the following.

According to an embodiment, the controller is configured to receive load current measurements for each phase from consumers connected to one or more phases of the charging arrangement, and is configured to control the load current in each of the phase conductors using the measurements for each phase.

In order to determine the load and to generate and send the control signal, a knowledge about the load current on each of the phases is necessary. This knowledge is obtained by measurements of the current on each of the phases.

According to an embodiment, the charging arrangement further comprises a first measurement arrangement connected to one of the phase conductors and connected to the controller, wherein the first measurement arrangement comprises means for measuring the load current of the phase conductor, and wherein the first measurement arrangement is configured to measure the amount of load current on the phase conductor and to signal the measured amounts of load current to the controller.

In other words, the charging arrangement comprises additionally measurement arrangements that measure the load on each of the phase conductors. Therefore, the controller that receives the measurement signals, which may be an analog or a digital signal from the measurement arrangement, can determine the imbalance between the phases.

According to an embodiment, the charging arrangement further comprises a second measurement arrangement inside a consumer, wherein the second measurement arrangement is configured to measure the load current on each phase the consumer generates and to report the measured load current.

In other words, the consumer itself reports the individual load current, i.e., the value obtained by the measurement, it currently generates.

According to an embodiment, the charging arrangement further comprises a third measurement arrangement wherein the third measurement arrangements located in a consumer charger equipment and/or centrally.

A measurement arrangement may be located in a consumer, i.e., a consumer device, consumer equipment or, generally spoken, an equipment providing the individual current for charging a consumer battery in case of a vehicle battery charging application. The consumer may further be a consumer charger equipment of a local charging station or charging terminal comprising the measurement arrangement. Alternatively, the measurement arrangement may be located inside a vehicle, for example in vicinity of or connected to a charging converter.

In cases the consumer does not comprise a measurement arrangement, the load it generates may be measured by a measurement arrangement that is provided centrally. For example, the controller and one or more measurement arrangements are co-located. They might be integrated in a single device. The load generated by a consumer without a measurement arrangement can further be estimated by measuring centrally the total load current as described further above and determining the difference to the sum of other already determined loads, or, for example, by determining the additional load current when a consumer starts its charging process.

The measurement arrangement reports the load current, i.e. the value of the measured amount of load current, to the controller such that the controller can interpret, which phase the consumer uses and which is the load generated by the consumer on each of these phases.

The first, second and third measurement arrangements may be available in any combination, dependent on the current configuration, i.e. the connected consumers and the connected charging stations. E.g., according to a configuration, only one or more first measurement arrangements are available, or one or more first and second measurement arrangements, etc.

According to an embodiment, the controller is further configured to control the load current on the phase conductors by sending a control signal containing an upper limit of the load current to consumers.

The controller sends a limit representing the maximum allowed current to each consumer, which is applicable to all connected phases of that consumer. For example, a consumer uses phases L1 and L2 of the charging arrangement, and the limit determined and signaled by the controller is 15A, then the consumer limits its load current on phase L1 to 15A and on phase L2 to 15A. The consumer is allowed to any value between 0A and 15A on each of the phases.

That is, the controller signals a limit to a consumer individually, rather than limiting the total current on the phase. In this way, it is possible to limit the current only for those consumers that cause the imbalance. Further, it is possible to limit the current for a consumer causing high imbalance more than the current for a consumer causing low imbalance.

According to an embodiment, the controller is configured to determine a limit only for those consumers that cause an imbalance.

Usually, the loads generated by a user on each phase are the same. If, for example, a measurement arrangement of a consumer signals a load generated on each of the phases of the charging arrangement, these load currents do not contribute to the imbalance. Therefore, they don't have to be limited. In another example, the controller may detect by the measurement inputs that a consumer generates a load on a single phase and another consumer generates an equal load on the other phases. Then, these consumers collectively do not cause an imbalance so that their load current does not have to be limited.

According to an embodiment, the controller is configured to determine the limit taking an allowed imbalance into account.

Since a perfect balance is neither required nor practically implementable, a remaining imbalance between the phases is allowed. The greater the allowed imbalance, the more flexible is the controller and the less it has to limit the currents.

According to an embodiment, the controller is configured to calculate the limit by determining the total load current on a phase not used by the consumer, adding the allowed imbalance to the total load current, resulting in the maximum load on each phase and calculating the limit such that the maximum load current on each phase is not exceeded on the used phases.

This is one of many possibilities to calculate the limit. In this embodiment, the calculation is based only the total load currents on the phases and the consumer under investigation. In other embodiments, more than a single consumer may be investigated at the same time.

An example is given in the following. The table shows the total load current on phases A, B, and C in the "total" column. In the next columns, the load current on each phase for the consumers X, Y, and Z are shown:

| Consumer | total | X | Y | Z |
|---|---|---|---|---|
| Phase A: | 45 A | 15 | 30 | 0 |
| Phase B: | 65 A | 15 | 30 | 20 |
| Phase C: | 35 A | 15 | 0 | 20 |

Investigating now consumer Y, we recognize that consumer Y does use only phases A and B. The load current on not used phase C is 35A. Assuming an allowed imbalance of 20A results in a maximum load current on each phase of 55A. To achieve this, consumer Y is limited to 20A such that the load current on phase B is 55A and on phase A is also 35A.

If this algorithm is not sufficient due to high imbalances, further consumers may be taken into account. An optimization can be reached, for example, by iterating loops over the consumers. Further, the example uses absolute values. In other embodiments, relations may be used instead. The relations may include relations for determining an allowed imbalance and/or for example percentages of induced imbalance or percentages of sharing limits between consumers.

The consumers are preferably connected to the grid, i.e., to the phases, in such a way that a rough balance is obtained. Clearly, a balance cannot be achieved if, for example, one phase is not connected at all. This might be obtained by either indicating a user or a consumer which terminal or which phases to use or by a switching matrix, which may be controlled by the controller.

According to an embodiment, the charging arrangement comprises a consumer charging controller for charging a battery using at least one of the phases of the charging arrangement. The consumer charging controller is configured to receive a limit representing an allowed maximum value of the load current generated by the charging, and to reduce the generated load current on each phase according to the received limit.

According to an embodiment, the charging arrangement is an electrical vehicle charging arrangement.

A vehicle may be a car, a bus, a boat, an airplane, a railway, a bike, or any other vehicle driven by an electrical motor, where the electrical motor receives power from an on-board battery.

According to a further aspect, a method for balancing phases of a charging arrangement as described herein with unbalanced consumer load currents is provided. The method includes the step: controlling the load current in each of the phase conductors by controlling a consumer and thereby balancing the amount of load currents between the phase conductors.

The method may comprise further steps as described herein. Especially, the method may comprise the steps of receiving measurements of the load generated by consumers connected to individual phases, determining a limit representing an allowed maximum value of the load generated by the consumer, and controlling the load current on the phase conductors by sending a control signal containing an upper limit of the load current to the consumer charging controller of the consumer.

According to a further aspect, a consumer is provided, which is connected to a charging arrangement as described herein. The consumer comprises a consumer charging controller configured to charge a battery using phases of the charging arrangement and a measurement arrangement. The measurement arrangement is configured to measure the load current it generates on each phase, and to send a measurement value for each phase to the charging arrangement. The consumer charging controller is configured to receive a limit representing an allowed maximum value of the load current generated by the charging, and to reduce the generated load current on each phase according to the received limit.

The consumer may, for example, be a charging assembly in a vehicle for charging a battery of a vehicle, a charging station or a charging terminal.

According to a further aspect, a use of a consumer charging controller for receiving a limit representative for a maximum load current value and controlling the load current of a consumer for balancing phases of a charging arrangement as described herein is provided.

That is, the consumer charging controller reduces an imbalance in a multi-phase grid.

### Short Description of the Figures

Fig. 1 shows a block diagram of a charging arrangement,
Fig. 2 shows a further block diagram of a charging arrangement,
Fig. 3 shows a flow diagram with steps of a method according to an embodiment.

### Detailed Description of Embodiments

Corresponding parts are provided with the same reference symbols in all figures.

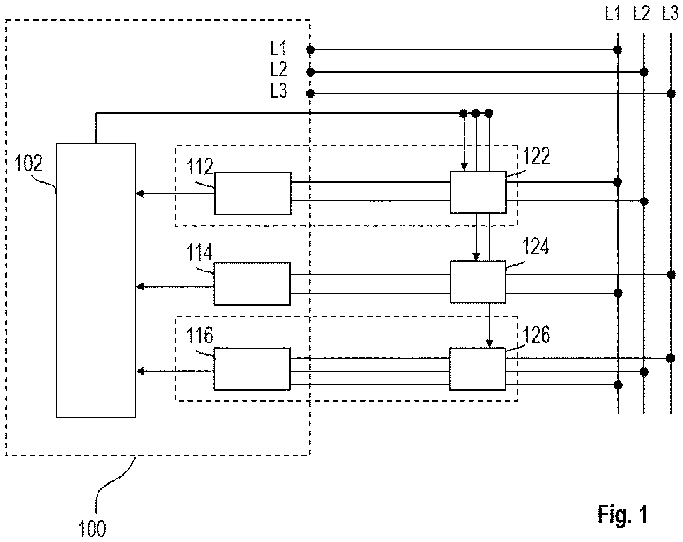

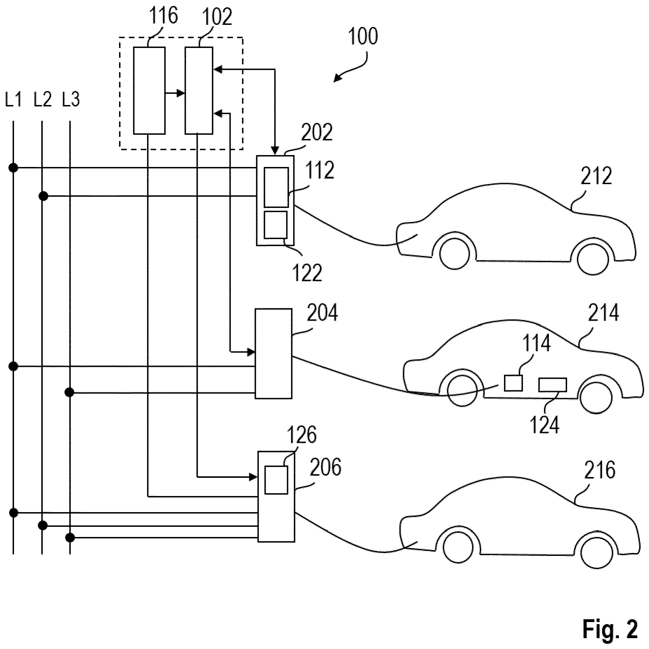

Fig. 1 shows a block diagram of a charging arrangement 100. The charging arrangement 100 shown in Fig. 1 includes a controller 102 and first 112, second 114 and third 116 measurement arrangements. The first, second and third measurement arrangements 112, 114, 116 are located at different entities and represent three different examples that might occur in the charging arrangement application. The controller 102 and the measurement arrangements 112, 114, 116 are considered being part of the charging arrangement 100, however the charging arrangement 100 may not be a single device, in which all of the measurement arrangements 112, 114, 116 are included. Rather, some of the measurement arrangements may be physically part of a local charging terminal or may even be located inside a vehicle as illustrated in Fig. 2. In embodiments, also the consumer charging controllers 122, 124, 126 are part of the charging arrangement 100. L1, L2 and L3 are the three-phase power output lines of the charging arrangement 100 connected to the charging controllers 122, 124, 126.

Fig. 2 shows an illustrative block diagram of the charging arrangement 100. Figures 1 and 2 correspond to each other, and hence the shown devices and arrangements and connections, except of vehicles 212, 214 and 216. Therefore, the explanations regarding Fig. 2 apply also to Fig. 1. Vehicle 212 is connected to charging terminal 202 that includes a measurement arrangement 112 for measuring the loads on the used phases and a consumer charging controller 122. The charging terminal 202 is connected to phases L1 and L2 of the 3-phase power grid with lines (or "phases") L1, L2, and L3. That is, when charging, the terminal generates an equal load current on phases L1 and L2, however no load current on L3. Similarly, terminal 204 is connected to phases L1 and L3, generating an equal load current on phases L1 and L3, however not on L3. In contrast to terminal 204, the power is controlled by a consumer charging controller, which may, for example, be part of a power converter, inside vehicle 214. The measurement arrangement 114 for measuring the load current on the used phases is also inside the vehicle 214. Finally, vehicle 216 is connected to terminal 206 that contains the consumer charging controller 126, however neither the terminal 206 nor the vehicle 216 contain a measurement arrangement. Therefore, a central measurement arrangement 116 is used for measuring the load currents on the phases L1, L2, and L3 of the terminal 206.

The measurement arrangements 112, 114, 116 comprise means for measuring the load currents generated by their respective terminals. Herein, the terminals are considered as generating the load current, although actually, the load current may be generated by all involved power devices in the charging chain. Herein, the load current on the phases related to each single charging process is of interest, independent of the involved devices in the single charging chain. The charging chain between terminal and battery of a vehicle is therefore simply denominated as "consumer". Controller 102 receives the measurement values from the measurement arrangements 112, 114, 116 and sums up the measured load current values separately for each phase L1, L2, L3. The controller 102 calculates a maximum allowed load current value for at least those consumers that cause an imbalance between the phases L1, L2, L3, such that at most an allowed imbalance remains. For consumers such as terminal 206 and vehicle 216 that are connected to all phases L1, L2, L3 and not causing an imbalance, the load current has not to be limited, i.e. a maximum allowed load current value does not have to be calculated. The calculated limit, i.e., the maximum allowed load current is calculated individually for the consumers. The controller generates a control signal which it sends to the corresponding consumer charging controller. The consumer charging controller finally controls the current according to the received maximum allowed value.

An algorithm to calculate a limit may include the following steps: adding an allowed value to the total load current value of a phase not used by a consumer, limiting the load current on a used phase such that the load current of a phase used by the consumer does not exceed the sum calculated in the previous step.

The communication between the controller and the consumer charging controller, as well as between the measurement arrangements and the controller may include any known type of suitable communication, that is analog, digital, wired, wireless, and according to any suitable communication standard.

The controller may include digital and/or analog devices. It may further include logic devices such as logic gates and digital processing devices such as CPLDs, FPGAs, processors, microprocessors, etc. It may further include data storage devices for storing instructions to be loaded and used by a processor and/or for storing values such as an allowed maximum imbalance. The storages may include non-volatile memory and/or volatile memory.

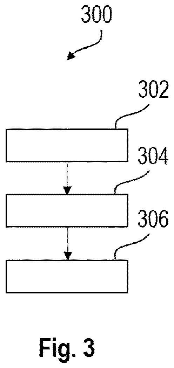

Fig. 3 shows a flow diagram with steps of a method 300 for balancing phases of a charging arrangement as described herein with unbalanced consumer load currents. The load current is controlled in each of the phase conductors by controlling the consumer and thereby the amount of current between the phase conductors is balanced.

Especially, the method may comprise the steps of receiving 302 measurements of the load current generated by consumers connected to individual phases L1, L2, L3, determining 304 a limit representing an allowed maximum value of the load current generated by the consumer, and controlling 306 the load current on the phase conductors by sending a control signal containing an upper limit of the load current to the consumer charging controller of the consumer. The method may comprise further steps as described herein.

### Reference Numerals

- 100: Charging arrangement
- 102: Controller
- 112: A first measurement arrangement
- 114: A second measurement arrangement
- 116: A third measurement arrangement
- 122: A first consumer charging controller
- 124: A second consumer charging controller
- 126: A third consumer charging controller
- 202: First charging terminal
- 204: Second charging terminal
- 206: Third charging terminal
- 212: A first vehicle
- 214: A second vehicle
- 216: A third vehicle
- 300: Method for balancing phases of the charging arrangement
- 302: method step
- 304: method step
- 306: method step

## Claims

1. Charging arrangement (100) for balancing load currents on multiple phases, the load currents being unbalanced between the phases caused by consumers connected to the phases, comprising
a three-phase current output line L1, L2, L3, with one phase conductor for each phase;and
a controller (102);
wherein the controller (102) comprises means to control the load current in each of the phase conductors by controlling a consumer and thereby balancing the amount of current between the phase conductors.

2. Charging arrangement (100) according to claim 1, wherein the controller (102) is configured to receive load current measurements for each phase from consumers connected to one or more phases of the charging arrangement (100); and to control the load current in each of the phase conductors using the measurements for each phase.

3. Charging arrangement (100) according to claim 1 or 2, wherein the charging arrangement (100) further comprises a first measurement arrangement (112) connected to one of the phase conductors and connected to the controller (102), wherein the first measurement arrangement (112) comprises means for measuring the load current of the phase conductor; and
wherein the first measurement arrangement (112) is configured to measure the amount of load current on the phase conductor and to signal the measured amounts of load current to the controller (102).

4. Charging arrangement (100) according to any of the previous claims, wherein the charging arrangement (100) further comprises a second measurement arrangement (114) inside a consumer, wherein the second measurement arrangement (114) is configured to measure the load current on each phase the consumer generates and to report the measured load current to the controller (102).

5. Charging arrangement (100) according to any of the previous claims, wherein the charging arrangement (100) further comprises a third measurement arrangement wherein the third measurement arrangement (116) is located in a consumer charger equipment and/or centrally.

6. Charging arrangement (100) according to any one of the previous claims,
wherein the controller (102) is further configured to control the load current on the phase conductors by sending a control signal containing an upper limit of the load current to consumers.

7. Charging arrangement (100) according to any of the claims 4 to 6, wherein the controller (102) is configured to determine a limit only for those consumers that cause an imbalance.

8. Charging arrangement (100) according to any of the claims 4 to 7, wherein the controller (102) is configured to determine the limit taking an allowed imbalance into account.

9. Charging arrangement (100) according to any of the claims 4 to 8, wherein the controller (102) is configured to calculate the limit by determining the total load current on a phase not used by the consumer, adding the allowed imbalance to the total load current, resulting in the maximum load on each phase and calculating the limit such that the maximum load current on each phase is not exceeded on the used phases.

10. Charging arrangement (100) according to any one of the previous claims, wherein the charging arrangement (100) comprises a consumer charging controller (122, 124, 126) (122, 124, 126) for charging a battery using at least one of the phases of the charging arrangement (100); and wherein the consumer charging controller (122, 124, 126) is configured to
receive a limit representing an allowed maximum value of the load current generated by the charging; and to
reduce the generated load current on each phase according to the received limit.

11. Charging arrangement (100) according to any one of the previous claims, wherein the charging arrangement (100) is an electrical vehicle charging arrangement (100).

12. Method (300) for balancing phases of a charging arrangement (100) according to claim 1 with unbalanced consumer load currents, comprising the step: controlling (306) the load current in each of the phase conductors by controlling a consumer and thereby balancing the amount of load currents between the phase conductors.

13. Consumer connected to a charging arrangement (100) according to claim 1, wherein the consumer comprises a consumer charging controller (122, 124, 126) configured to charge a battery using phases of the charging arrangement (100) and a measurement arrangement (112), and wherein
the measurement arrangement (112) is configured to
measure the load current it generates on each phase; and to
send a measurement value for each phase to the charging arrangement (100);
and
the consumer charging controller (122, 124, 126) is configured to
receive a limit representing an allowed maximum value of the load current generated by the charging; and to
reduce the generated load current on each phase according to the received limit.

14. Use of a consumer charging controller (122, 124, 126) for receiving a limit representative for a maximum load current value and controlling the load current of a consumer for balancing phases of a charging arrangement (100) according to claim 1.
